# EUROPÄISCHE PATENTANMELDUNG

(11) **EP 1 525 942 A1**
(43) Veröffentlichungstag der Anmeldung: **27.04.2005**
(21) Anmeldenummer: 03024445.3
(22) Anmeldetag: 23.10.2003
(51) Int. Cl.: B23P 6/00, F01D 5/18

(54) **Gasturbine und Laufschaufel für eine Strömungsmaschine**

(71) Anmelder: SIEMENS AKTIENGESELLSCHAFT, 80333 München (DE)
(72) Erfinder: Ahmad, Fathi, 41564 Kaarst (DE); Dankert, Michael, Dr., 63069 Offenbach (DE)

(57) **Zusammenfassung**

Die Erfindung betrifft eine Laufschaufel (16) für eine von einem Strömungsmedium durchströmte Strömungsmaschine, insbesondere für eine von einem Arbeitsfluid (20) durchströmte Gasturbine, die aufeinanderfolgend einen Laufschaufelfuß (33), einen sich quer dazu erstreckenden Plattformbereich (21) und ein gekrümmtes Schaufelblattprofil (24) umfasst, bei der das Schaufelblattprofil (24) sich von einer vom Arbeitsfluid (20) anströmbaren Vorderkante (25) zu einer Hinterkante (26) erstreckt, zwischen denen eine Saugseite (27) und eine Druckseite (28) des Schaufelblattprofils (24) ausgebildet ist, mit einem Entlastungsschlitz (30) mit einer Längserstreckung im Schaufelblattprofil. Um eine Laufschaufel mit einer erhöhten Lebensdauer anzugeben, wird vorgeschlagen, dass der Entlastungsschlitz (30) an dem dem Plattformbereich (29) zugewandten Ende des Schaufelblattprofils (24) im Bereich der Hinterkante (26) angeordnet ist, sich durch das Schaufelblattprofil (24) von der Saugseite (27) zu der Druckseite (28) erstreckt und dessen Längserstreckung im wesentlichen quer zur Strömungsrichtung des Arbeitsfluids (20) ausgerichtet ist.

## Beschreibung

Die Erfindung betrifft eine Laufschaufel für eine Strömungsmaschine, insbesondere für eine Gasturbine, gemäss dem Oberbegriff des Anspruchs 1 und eine Gasturbine gemäss Anspruch 8.

An Generatoren angekoppelte Gasturbinen werden zur Umwandlung von fossiler Energie in elektrische Energie eingesetzt. Eine Gasturbine weist dazu entlang ihrer Rotorwelle einen Verdichter, eine Brennkammer und eine Turbine auf. Beim Betrieb saugt der Verdichter Umgebungsluft an und verdichtet diese. Anschließend wird die Verdichterluft mit einem Brennmittel vermischt und der Brennkammer zugeführt. Dort verbrennt das Gemisch zu einem heißen Arbeitsmedium und strömt in die der Brennkammer nachgeschalteten Turbine, in der Schaufeln vorgesehen sind. Die am Gehäuse der Turbine befestigten Leitschaufeln lenken dabei das Arbeitsmedium auf die am Rotor befestigten Laufschaufeln, so dass diese den Rotor in eine Drehbewegung versetzen. Die so aufgenommene Rotationsenergie des Rotors wird dann durch den am Rotor angekoppelten Generator in elektrische Energie umgewandelt.

Die Laufschaufeln der Gasturbine sind mechanischen, insbesondere durch Fliehkraft hervorgerufenen Belastungen ausgesetzt. Besonders unter der Einwirkung der hohen Temperaturen des Arbeitsmediums können dabei Risse im Schaufelmaterial entstehen, welche die Lebensdauer der Laufschaufeln verkürzen. Eine andauernde Beanspruchung kann dann zu Risswachstum führen. Unter der anstehenden Belastungen kann es dann zu einem Versagen der Schaufel kommen, wobei dann die Schaufel zerbricht oder Bruchstücke herausgelöst werden. Für die in Strömungsrichtung des Arbeitsmediums nachfolgenden Schaufeln kann dies zu Beschädigungen führen. Eine Rissbildung und Rissausbreitung ist somit in regelmäßigen Serviceintervallen zu überwachen.

In der US 6,490,791 ist ein Verfahren beschrieben, bei dem in einem Serviceprozess Risse in der Hinterkante einer Turbinenschaufel durch ein Zurückschneiden der Hinterkante beseitigt werden. Die durch die verkürzte Hinterkante hervorgerufenen aerodynamischen Verluste werden durch ein anschließendes abrunden des Schaufelprofils gering gehalten.

In der JP 2000018001 ist eine Laufschaufel für eine Gasturbine gezeigt, bei der an der Anstreifkante Kerben eingebracht sind, die sich in radialer Richtung erstrecken. Dies führt zu einer Reduzierung der thermischen Spannungen in diesem Bereich.

Die JP 10299408 zeigt eine Gasturbinenleitschaufel, die im Übergangsbereich von Plattform zum Schaufelprofil ellipsenförmige Entlastungskerben aufweist, deren Hauptachse quer zur Hauptbelastungsrichtung ausgerichtet sind, um ein Risswachstum zu vermeiden.

Aufgabe der Erfindung ist die Angabe einer Schaufel einer Strömungsmaschine mit einer erhöhten Lebensdauer. Weitere Aufgabe der Erfindung ist die Angabe einer Gasturbine mit einer solchen Schaufel.

Erfindungsgemäß wird die auf eine Schaufel gerichtete Aufgabe durch die Merkmale des Anspruchs 1 gelöst. Vorteilhafte Ausgestaltungen sind in den Unteransprüchen angegeben.

Die Lösung sieht vor, dass der Entlastungsschlitz an dem dem Plattformbereich zugewandten Ende des Schaufelblattprofils im Bereich der Hinterkante angeordnet ist, sich durch das Schaufelblattprofil hindurch von der Saugseite zu der Druckseite erstreckt und dessen Längserstreckung im wesentlichen quer zur Strömungsrichtung des Strömungsmediums ausgerichtet ist.

Die Erfindung geht von der Erkenntnis aus, dass Risse häufig im plattformnahen Bereich des Schaufelblattprofils an der Hinterkante entstehen, die bei fortwährender Beanspruchung in Richtung der Vorderkante des Schaufelblattprofils wachsen. Die Rissausbreitung in axialer, d.h. in Strömungsrichtung des Strömungsmediums wird durch den Schlitz, der hier als eine längliche Öffnung aufzufassen ist, dessen Längsausdehnung um ein Vielfaches größer ist als dessen Querausdehnung, wirksam begrenzt.

Bevorzugtermassen ist die Vorderkante von der Hinterkante entlang einer Profilsehne mit der Sehnenlänge A beabstandet. Dabei ist der Entlastungsschlitz von der Vorderkante in einem Abstand von mindestens 90% der Sehnenlänge vorgesehen. Diese günstige Lage bedingt, dass von der Hinterkante aus in Axialrichtung entstehende Risse eine maximale und vernachlässigbare Länge von 10% der Sehnenlänge aufweisen.

In einer vorteilhaften Ausgestaltung weist das Schaufelblattprofil eine sich senkrecht zur Profilsehne erstreckende Blatthöhe auf. In Längserstreckung weist der Entlastungsschlitz eine Länge auf, die dabei im Intervall von 5% bis 10% der Blatthöhe liegt. Da der besonders rissgefährdete Bereich an der Hinterkante der Laufschaufel im plattformnahen Bereich liegt, werden die dort entstehenden Risse größtenteils im Entlastungsschlitz auslaufen.

In einer bevorzugten Weiterbildung weist das Ende des Entlastungsschlitzes, welches dem Plattformbereich zugewandt ist, zum Plattformbereich einen Abstand von 5% bis 10% der Blatthöhe auf.

Wenn der Entlastungsschlitz an seinen Enden der Längserstreckung angerundet ist, werden im umliegenden Schaufelmaterial Belastungsspitzen vermieden, so dass von dort aus keine neuen Risse entstehen und wachsen.

Wenn der Entlastungsschlitz mit einem Füllmaterial gefüllt ist, welches einen Wärmedehnungskoeffizienten aufweist, der gleich oder kleiner ist als der des Schaufelmaterials, wird bei der thermischen Belastung der Schaufel durch das Füllmaterial keine Druckspannung im Schaufelmaterial hervorgerufen. Das Vorhandensein einer solchen Druckspannung im Schaufelmaterial würde das unerwünschte Risswachstum begünstigen. Ferner werden Druckverluste im Strömungsmedium durch einen offenen Entlastungsschlitz vermieden.

Wenn das Füllmaterial ein Lot ist, kann dieses bei niedrigeren Temperaturen in den Entlastungsschlitz eingebracht werden, als bei den Temperaturen, die zur Herstellung der Laufschaufel erforderlich sind. Eine Rekristallisation des Schaufelmaterials kann somit umgangen werden.

Zweckmäßigerweise ist die Hinterkante der Laufschaufel ungekühlt. Die Hinterkante von offen gekühlten Laufschaufeln weisen üblicherweise eine Vielzahl von sich in Axialrichtung erstreckenden Filmkühlöffnungen auf, die die Hinterkante kühlen. Wäre an Stelle von Filmkühlöffnungen ein derart großer offener Entlastungsschlitz vorgesehen, aus dem Kühlluft austritt, dann könnte in der Schaufel ein zu großer Druckverlust in der Kühlluft entstehen, der dann das Eindringen von Heißgas in die Laufschaufel begünstigt. Daher ist die Anwendung eines offenen Entlastungsschlitzes bei Laufschaufeln vorzugsweise vorgesehen, deren Hinterkante ungekühlt ist.

Besonders vorteilhaft ist das Vorsehen von Entlastungsschlitzen bei einkristallinen oder gerichtet erstarrten Turbinenlaufschaufeln, die durch ihre kleineren Korngrenzen im Schaufelmaterial eher zu Rissbildungen neigen als konventionell gegossene Schaufeln. Dementsprechend ist gerade hier eine Begrenzung der Rissausbreitung wichtig.

Die auf die Gasturbine gerichtete Aufgabe wird durch die Merkmale des Anspruchs 8 gelöst.

Die Erfindung wird anhand einer Zeichnung erläutert. Dabei zeigen die Figuren
- Figur 1: eine erfindungsgemäße Laufschaufel für eine Turbine,
- Figur 2: eine Gasturbine in einem Längsteilschnitt und
- Figur 3: die Laufschaufel mit einem abgerundeten Entlastungsschlitz.

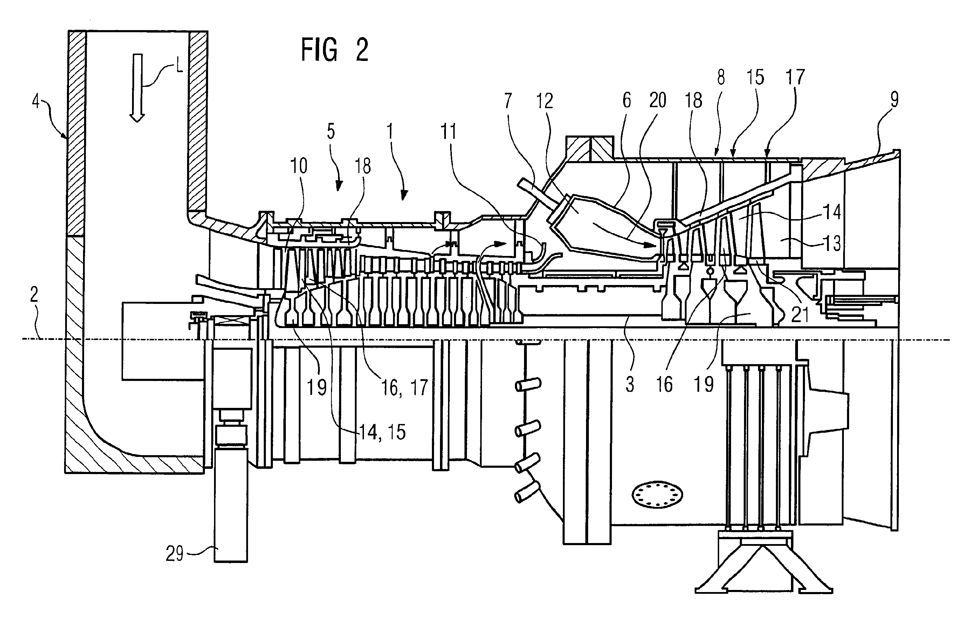

Die Figur 2 zeigt eine Gasturbine 1 in einem Längsteilschnitt. Sie weist im Inneren einen um eine Drehachse 2 drehgelagerten Rotor 3 auf, der auch als Turbinenläufer oder Rotorwelle bezeichnet wird. Entlang des Rotors 3 folgen aufeinander ein Ansauggehäuse 4, ein Verdichter 5, eine torusartige Ringbrennkammer 6 mit mehreren koaxial angeordneten Brennern 7, eine Turbine 8 und das Abgasgehäuse 9.

Im Verdichter 5 ist ein ringförmiger Verdichterkanal 10 vor gesehen, der sich in Richtung der Ringbrennkammer 6 im Querschnitt verjüngt. Am brennkammerseitigen Ausgang des Verdichters 5 ist ein Diffusor 11 angeordnet, der mit der Ringbrennkammer 6 in Strömungsverbindung steht. Die Ringbrennkammer 6 bildet einen Verbrennungsraum 12 für ein Gemisch aus einem Brennmittel und verdichteter Luft. Ein in der Turbine 8 angeordneter Heißgaskanal 13 ist mit dem Verbrennungsraum 12 in Strömungsverbindung, wobei dem Heißgaskanal 13 das Abgasgehäuse 9 nachgeordnet ist.

Im Verdichterkanal 10 und im Heißgaskanal 13 sind jeweils alternierend Schaufelringe angeordnet. Es folgt einem aus Leitschaufeln 14 gebildeten Leitschaufelring 15 jeweils ein aus Laufschaufeln 16 gebildeter Laufschaufelring 17. Die feststehenden Leitschaufeln 14 sind dabei mit einem Leitschaufelträger 18 verbunden, wo hingegen die Laufschaufeln 16 am Rotor 3 mittels einer Scheibe 19 verbunden sind.

Während des Betriebes der Gasturbine 1 wird vom Verdichter 5 durch das Ansauggehäuse 4 Luft angesaugt und im Verdichterkanal 10 verdichtet. Eine am brennerseitigen Ende des Verdichters 5 bereitgestellt Luft L wird durch den Diffusor 11 zu den Brennern 7 geführt und dort mit einem Brennmittel vermischt. Das Gemisch wird dann unter Bildung eines Arbeitsfluids 20 im Verbrennungsraum 10 verbrannt. Von dort aus strömt das Arbeitsfluid 20 in den Heißgaskanal 13. An den in der Turbine 8 angeordneten Leitschaufeln 14 und an den Laufschaufeln 16 entspannt sich das Arbeitsfluid 20 impulsübertragend, so dass der Rotor 3 angetrieben wird und mit ihm eine an ihm angekoppelte Arbeitsmaschine (nicht dargestellt).

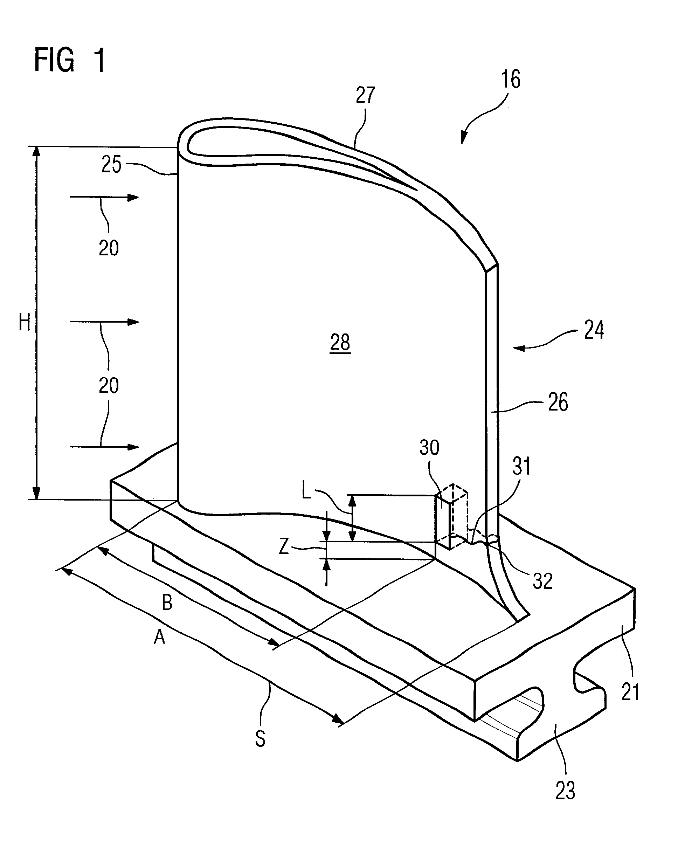

Figur 1 zeigt eine erfindungsgemäße hohle Laufschaufel 16 für eine Turbine 8 mit einem Laufschaufelfuß 23, an dem eine Plattform 21 angeformt ist. Der Plattform 21 folgt das Schaufelblattprofil 24, welches von einem Arbeitsfluid 20 umströmt wird. Das Schaufelblattprofil 24 erstreckt sich in Strömungsrichtung des Arbeitsmediums 20 gesehen von einer Vorderkante 25 zu einer Hinterkante 26. Von der Vorderkante 25 aus erstrecken sich zwei Schaufelwände unter Bildung einer Saugseite 27 und einer Druckseite 28 zu einer Hinterkante 26, an der sie zusammenlaufen. Im Bereich der Hinterkante 26 im plattformnahen Bereich 29 ist ein Entlastungsschlitz 30 vorgesehen. Der Entlastungsschlitz 30 weist eine Länge L auf und ist von der Plattform 21 in einer Höhe Z entfernt. Von der Vorderkante 25 zur Hinterkante 26 erstreckt sich die Profilsehne S des Schaufelblattprofils 24 mit einer Sehnenlänge A.

Der Entlastungsschlitz 30 ist im hinteren Bereich nahe der Hinterkante 26 angeordnet, so dass dieser mindestens mit einem Abstand B von der Vorderkante 25 entfernt ist, der 90% der Sehnenlänge A beträgt.

Das Schaufelblattprofil 24 weist eine Höhe H auf. Die Länge L des Entlastungsschlitzes 30 liegt dabei im Bereich von 5% bis 10% der Höhe H des Schaufelblattprofils 24. Ebenso liegt der Abstand Z des Entlastungsschlitzes 30 zur Plattform 21 in einem Bereich von 5% bis 10% der Höhe H des Schaufelblattprofils 24.

Aufgrund der thermischen Belastungen der Laufschaufel 16, und insbesondere durch die hohen Fliehkräfte, können Rissbildungen im Schaufelblattprofil 24 auftreten, im besonderen im Bereich der Hinterkante 26. Diese Risse wachsen von der Hinterkante 26 in Richtung der Vorderkante 25, insbesondere im plattformnahen Bereich 29, da dort die Fliehkräfte am höchsten sind. Ein solcher Riss ist in FIG. 1 dargestellt und mit dem Bezugszeichen 31 bezeichnet.

Vom Entstehungspunkt 32 wächst der Riss 31 in der Richtung Vorderkante 25 und endet im Entlastungsschlitz 30. Ein weiteres Wachstum des Risses 31 wird durch den Entlastungsschlitzes 30 verhindert. Demgemäss werden Störungen der Gasturbine 1 vermieden und Serviceintervalle verkürzt, da bei einem Serviceprozess dann weniger defekte Turbinenlaufschaufeln ausgetauscht werden müssen. Besonders vorteilhaft ist das Vorsehen von Entlastungsschlitzen 30 bei einkristallinen oder gerichtet erstarrten Turbinenlaufschaufeln 16, die durch ihre kleineren Korngrenzen im Schaufelmaterial 34 eher zu Rissbildungen neigen. Da die Risse 31 im Entlastungsschlitz 30 enden, kann das Überschreiten einer kritischen Risslänge verhindert werden.

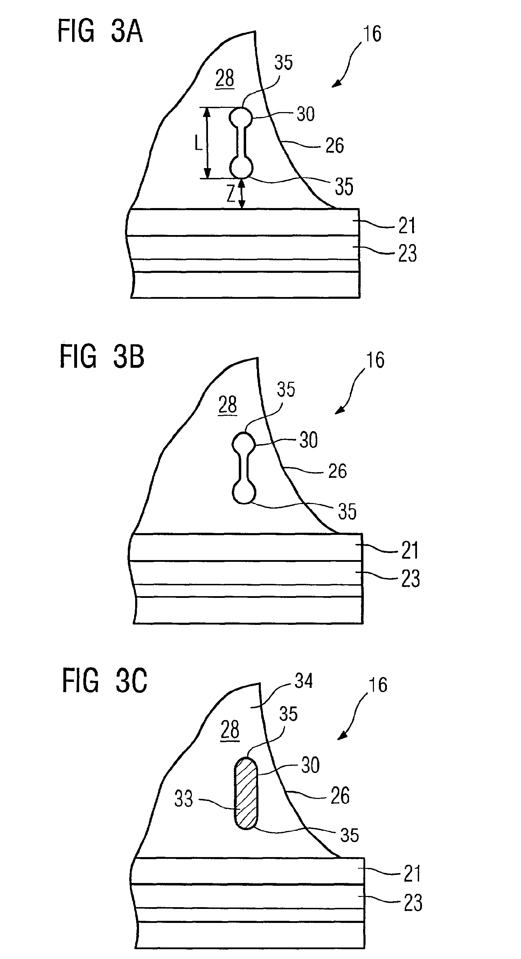

Figur 3 zeigt verschiedene Ausführungsformen von Entlastungsschlitzen 30. Die länglich geformten Entlastungsschlitze 30 sind im Bereich der Plattform 21 nahe der Hinterkante 26 angeordnet und weisen an ihren Enden der Längserstreckung unterschiedlich geformte Abrundungen 35 auf.

Figur 3a und 3b zeigt dabei den Entlastungsschlitz 30 in Form eines Knochens. In Figur 3c ist der Entlastungsschlitz 30 als Langloch ausgebildet. Die Breite des Entlastungsschlitzes 30 beträgt jeweils nur 15% bis 25% seiner Länge L.

In Figur 3c ist der Entlastungsschlitz 30 mit einem Füllmaterial 33 ausgefüllt. Das Füllmaterial 33 verhindert, dass von der Druckseite 28 Arbeitsfluid 20 zur Saugseite 27 verlustbehaftet strömt.

Um weitere Spannungen im Schaufelmaterial 34 zu vermeiden, weist das Füllmaterial 33, z.B. ein Lot, einen gleichen oder einen geringeren Wärmedehnungskoeffizienten auf als das Schaufelmaterial 34.

Das Schaufelblattprofil 24 der Laufschaufel 16 einschließlich des ausgefüllten Entlastungsschlitzes 30 könnte auch mit einer Schutzschicht überzogen sein. Die Schutzschicht kann dabei eine Overlay-Schicht sein, die sich überwiegend aus den chemischen Elementen MCrAlY zusammensetzt, wobei M für Fe, Ni, Co steht. Zusätzlich könnte die Schutzschicht eine Keramik als wärmedämmende Schicht umfassen.

## Patentansprüche

1. Laufschaufel (16) für eine Strömungsmaschine, insbesondere für eine von einem Arbeitsfluid (20) durchströmte Gasturbine,
mit einem Laufschaufelfuß (33), einem sich quer dazu erstreckenden Plattformbereich (21) und einem gekrümmten Schaufelblattprofil (24),
das sich von einer vom Arbeitsfluid (20) anströmbaren Vorderkante (25) zu einer Hinterkante (26) erstreckt, zwischen denen eine Saugseite (27) und eine Druckseite (28) des Schaufelblattprofils (24) ausgebildet ist
sowie mit einem Entlastungsschlitz (30) im Schaufelblattprofil (24),
**dadurch gekennzeichnet, dass**
der Entlastungsschlitz (30) an dem dem Plattformbereich (29) zugewandten Ende des Schaufelblattprofils (24) im Bereich der Hinterkante (26) angeordnet ist, sich durch das Schaufelblattprofil (24) von der Saugseite (27) zu der Druckseite (28) hindurch erstreckt und im wesentlichen quer zur Strömungsrichtung des Arbeitsfluids (20) ausgerichtet ist.

2. Laufschaufel (16) nach Anspruch 1,
**dadurch gekennzeichnet, dass**
der Entlastungsschlitz (30) von der Vorderkante (25) der Laufschaufel (16) in einem Abstand B von mindestens 90% einer zwischen der Vorderkante (25) und der Hinterkante (26) gemessenen Sehnenlänge A einer Profilsehne (S) vorgesehen ist.

3. Laufschaufel (16) nach Anspruch 1 oder 2,
**dadurch gekennzeichnet, dass**
der Entlastungsschlitz (39) eine Länge L aufweist, die im Intervall von 5% bis 10% der Blatthöhe H des Schaufelblattprofils (24) liegt.

4. Laufschaufel (16) nach Anspruch 1, 2 oder 3,
**dadurch gekennzeichnet, dass**
das dem Plattformbereich (21) zugewandte Ende des Entlastungsschlitzes (30) zum Plattformbereich (21) einen Abstand Z von 5% bis 10% der Blatthöhe H des Schaufelblattprofils (24) aufweist.

5. Laufschaufel (16) nach einem der vorherigen Ansprüche,
**dadurch gekennzeichnet, dass**
der Entlastungsschlitz (30) an seinen Enden abgerundet ist.

6. Laufschaufel (16) nach einem der vorherigen Ansprüche,
**dadurch gekennzeichnet, dass**
der Entlastungsschlitz (30) mit einem Füllmaterial (33) gefüllt ist, welches einen Wärmedehnungskoeffizienten aufweist, der gleich oder kleiner ist als der des Schaufelmaterials (34).

7. Laufschaufel (16) nach einem der vorherigen Ansprüche,
**dadurch gekennzeichnet, dass**
das Füllmaterial (33) ein Lot ist.

8. Laufschaufel (16) nach einem der vorherigen Ansprüche,
**dadurch gekennzeichnet, dass**
die Laufschaufel (16) einkristallin oder gerichtet erstarrt ist.

9. Gasturbine (1) mit einer Laufschaufel (16) nach einem der vorherigen Ansprüche.
